Europäisches Patentamt

European Patent Office

Office européen des brevets

(11) Numéro de publication: **0 421 886 A1**

(12) **DEMANDE DE BREVET EUROPEEN**

(21) Numéro de dépôt: **90402762.0**

(22) Date de dépôt: **05.10.90**

(51) Int. Cl.⁵: **G02B 27/00**

(30) Priorité: **06.10.89 FR 8913067**

(43) Date de publication de la demande:
**10.04.91 Bulletin 91/15**

(84) Etats contractants désignés:
**DE GB IT**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Garajedagui,Fereydoun**

**1 Bis, rue Castéja**
**F-92100 Boulogne-Billancourt(FR)**
Inventeur: **Perrin, Bertrand**
**15, rue de la Meulonnière**
**F-92500 Rueil-Malmaison(FR)**
Inventeur: **Voisin, Olivier**
**20, rue Jules Vallès**
**F-75011 Paris(FR)**

(74) Mandataire: **Saint Martin, René et al**
**Régie Nationale des Usines Renault 8 & 10,**
**avenue Emile Zola**
**F-92109 Boulogne Billancourt(FR)**

(54) **Dispositif de visualisation.**

㉗ Dispositif de visualisation tête haute notamment pour un véhicule automobile destiné à visualiser des informations d'aide à la conduite dans le champ de vision du conducteur, constitué d'une source d'affichage d'informations (1) du type électro-optique envoyant au travers d'un polariseur (2), un faisceau lumineux vers un élément mélangeur, caractérisé par le fait qu'il comporte au moins une lame demi-onde (8) associée au pare-brise (5) et au polariseur et positionnée convenablement par rapport à la direction de polarisation du faisceau lumineux incident qui arrive sous un angle proche de l'angle de Brewster sur le pare-brise.

Fig. 1

## DISPOSITIF DE VISUALISATION

La présente invention se rapporte à un dispositif de visualisation tête haute notamment pour un véhicule automobile destiné à visualiser des informations d'aide à la conduite dans le champ de vision du conducteur, constitué d'une source d'affichage d'informations du type électro-optique envoyant au travers d'un polariseur un faisceau lumineux vers un élément mélangeur qui réfléchit ledit faisceau vers le conducteur et lui transmet aussi les informations extérieures (paysage) via le pare-brise.

On connaît par le document DE-3.347.271 un dispositif du type ci-dessus : le mélangeur est un empilement de couches minces multi-diélectriques assurant une bonne réflexion vers l'oeil du conducteur, du faisceau lumineux venant de la source d'affichage via un polariseur linéaire.

Cette solution a le mérite d'augmenter le contraste de l'image utile (afficheur) par rapport au fond (paysage) mais ne réduit qu'imparfaitement l'image secondaire produite par la face externe du pare-brise : pour que cette image parasite ne soit pas gênante, il faudrait accroître la réflectivité du mélangeur, qui est limitée par les normes de transmission imposées au pare-brise.

La présente invention a pour but de fournir un dispositif de visualisation tête haute supprimant l'image secondaire de l'affichage. Par ailleurs, la transmission de la lumière venant du paysage au travers du pare-brise s'effectue avec un bon rendement.

Le dispositif est caractérisé par le fait qu'il comporte au moins une lame demi-onde associée au pare-brise et au polariseur et positionnée convenablement par rapport à la direction de polarisation du faisceau lumineux incident qui arrive sous un angle proche de l'angle de Brewster sur le pare-brise.

Selon une caractéristique, la lame demi-onde est collée ou fixée sur la face interne du pare-brise, et la direction du polarisateur est perpendiculaire au plan d'incidence.

L'invention va maintenant être décrite avec plus de détail en se référant à des modes de réalisation donnés à titre d'exemples et représentés par les dessins annexés.

La figure 1 est une vue schématique d'un dispositif de visualisation tête haute.

La figure 2 est un détail du pare-brise et de la lame demi-onde collée ou fixée sur le pare-brise d'une première variante de l'invention.

La figure 3 est un détail du pare-brise et de la lame demi-onde intégrée au pare-brise d'une deuxième variante de l'invention.

La figure 4 est un détail du pare-brise et de la lame demi-onde située devant le pare-brise d'une troisième variante de l'invention.

La figure 5 est un détail du pare-brise et de deux lames demi-onde intégrées au pare-brise d'une quatrième variante.

La figure 6 est une schéma pour expliquer le principe de fonctionnement du dispositif : conditions opératoires telles que la lame demi-onde réalise la fonction décrite plus haut, à savoir la suppression de la double image.

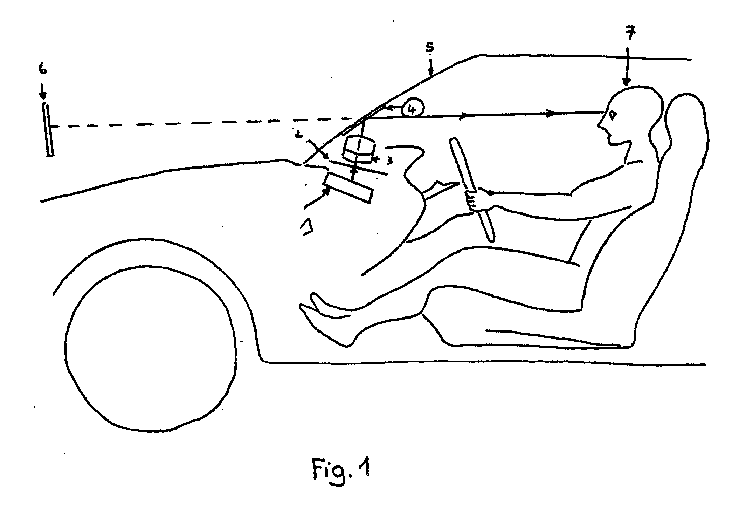

En se référant à la figure 1, le dispositif se compose d'une source d'affichage d'informations 1, d'un système optique comprenant un projecteur 3 et un mélangeur 4 (ce dernier étant lié ou non au pare-brise 5), qui donne de l'afficheur 1 une image virtuelle 6 située dans le champ de vision du conducteur 7.

La source d'affichage 1 est montée, par exemple, dans la planche de bord du véhicule.

Un polariseur rectiligne ou linéaire 2 est disposé sur le trajet des rayons lumineux en aval de la source d'informations 1. Le polariseur peut être incorporé dans la source d'affichage.

Dans le mode de réalisation de la figure 1, un polariseur rectiligne 2 est placé devant l'afficheur 1. Un mélangeur 4 se trouve sur une lame demi-onde 8 qui elle-même est collée ou fixée sur le pare-brise 5. La lame demi-onde est ajustée pour l'angle d'incidence utilisé et tient compte du spectre d'émission de la source lumineuse.

Il est à noter que la présence du mélangeur 4 n'est pas indispensable, l'interface air - lame demi-onde pouvant créer une réflexion suffisante. Dans une version préférentielle, la mélangeur 4 est composé d'un empilement de couches minces diélectriques, permettant une bonne réflexion de l'onde incidente.

Le montage optique est réalisé de façon à ce que le rayon incident fasse un angle proche de l'angle de Brewster avec la surface du mélangeur 4. Le rayon incident est polarisé suivant le mode s correspondant à une polarisation perpendiculaire au plan d'incidence.

Une partie de l'énergie lumineuse $R_u$ est réfléchie sur le mélangeur 4 et donne naissance à l'image utile. La partie réfractée de la lumière passe par la lame demi-onde 8 (convenablement orientée par rapport à la polarisation de la lumière) et voit sa polarisation tournée de 90° à la sortie de la lame 8. La condition de Brewster étant sensiblement respectée, cette onde convenablement polarisée ne donne pratiquement pas lieu à une réflexion sur la face extérieure du pare-brise et l'énergie lumineuse $R_p$ correspondant à l'image secondaire est ainsi minimisée.

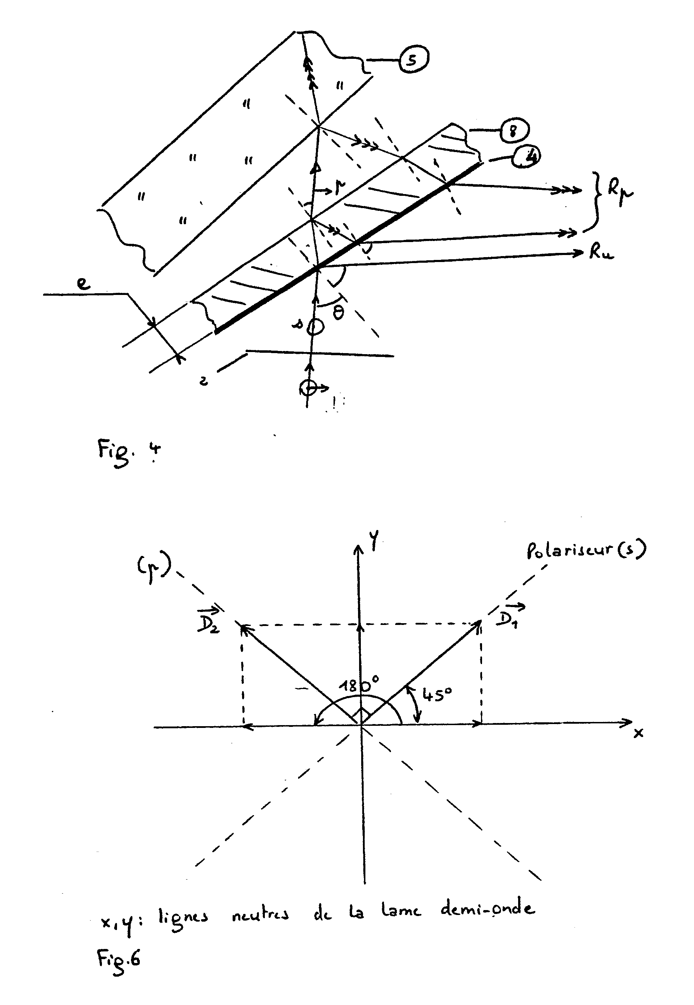

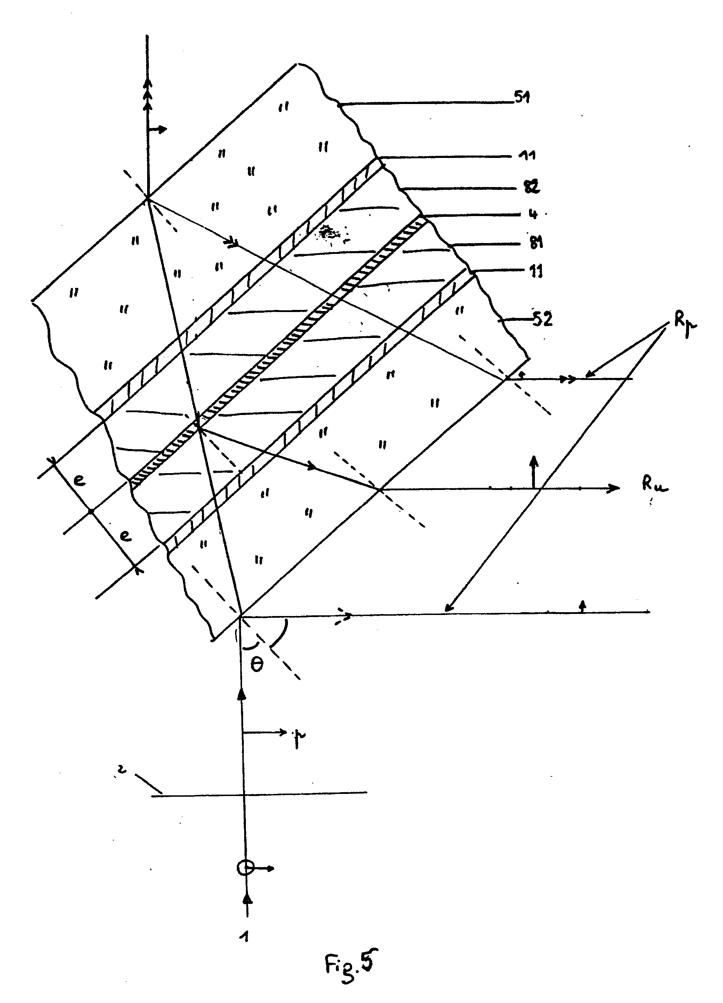

Dans la variante de la figure 3, la fonction mélange est réalisée, soit par un mélangeur 4 déposé sur la face interne du pare-brise, soit par l'interface pare-brise/air. Dans cette variante, la lame demi-onde 8 est intégrée dans le pare-brise 5 entre la feuille interne 52 et la feuille externe 51 dudit pare-brise qui est du type feuilleté.

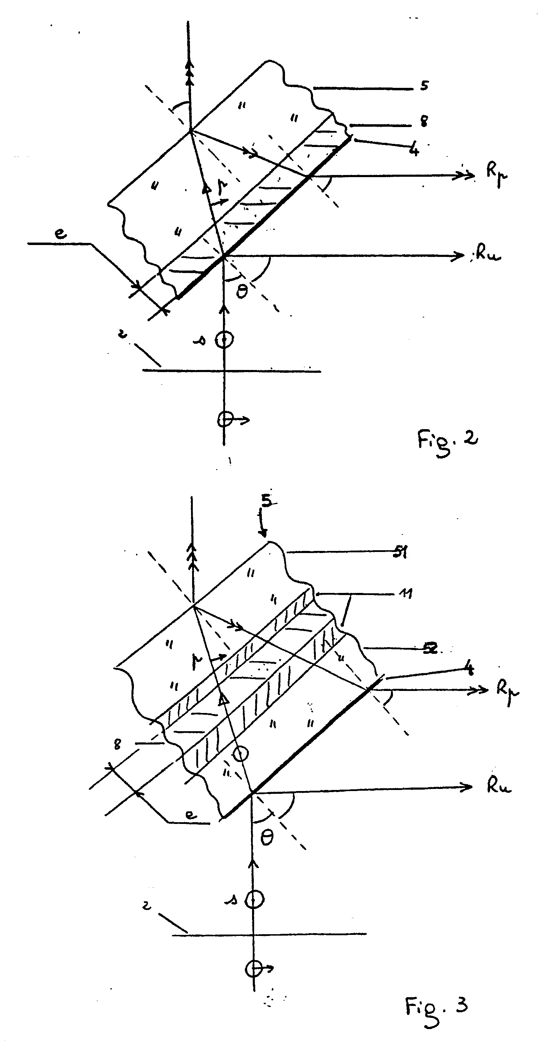

La lame 8 peut être placée en "sandwich" entre deux films 11 en PVB (Butyral de polyvinyle) eux-mêmes en sandwich entre les feuilles 51 et 52. Le principe de fonctionnement optique de cette variante est identique à celui de la variante de la figure 2. La direction de polarisation est perpendiculaire au plan d'incidence.

Dans la variante de la figure 4, la lame demi-onde 8 sur laquelle on a déposé avantageusement un mélangeur 4 est séparée du pare-brise et fait un angle non nul avec celui-ci. La direction de polarisation est perpendiculaire au plan d'incidence. Dans ce cas, pour éliminer des images parasites correspondant aux réflexions sur les différents interfaces, la lame 8 et la surface du pare-brise 5 ne sont pas parallèles entre elles.

Dans la variante de la figure 5, deux lames demi-ondes 81 et 82 sont intégrées dans le pare-brise, entre la feuille interne 52 et la feuille externe 51 dudit pare-brise. L'élément mélangeur 4 se trouve entre les deux lames 81 et 82 et les sépare. Ici la polarisation est selon le mode P (parallèle au plan d'incidence) et ne subit pratiquement pas de réflexion, sur la face interne du pare-brise, et ceci parce que la condition de Brewster est sensiblement respectée.

La quasi-totalité de l'onde incidente est donc réfractée et passe par la première lame demi-onde 8 qui fait tourne le plan de polarisation de 90°. L'onde lumineuse subit une réflexion partielle sur le mélangeur 4 qui se trouve entre les deux lames demi-ondes. Cette réflexion correspond à l'image utile.

La partie de l'onde non réfléchie passe par la deuxième lame demi-onde 82 et voit sa polarisation tournée encore de 90°. Cette polarisation est telle que, compte tenu du respect de la condition de Brewster, la réflexion sur la face extérieure du pare-brise est quasiment nulle.

Dans chacune des variantes, l'épaisseur optique de la lame demi-onde 8 est ajustée sur une longueur d'onde correspondant au maximum d'émission de la source d'affichage 1 et pour l'angle d'incidence cu rayon lumineux. La lame demi-onde 8 est positionnée de façon que la direction de polarisation fasse un angle de 45° par rapport aux lignes neutres de cette lame.

Le mélangeur est formé d'une ou plusieurs couches minces.

Il est bien entendu que l'on peut, sans sortir du cadre de l'invention, imaginer des variantes et des perfectionnements de détail et de même envisager l'emploi de moyens équivalents.

## Revendications

1°) Dispositif de visualisation tête haute notamment pour un véhicule automobile destiné à visualiser des informations d'aide à la conduite dans le champ de vision du conducteur, constitué d'une source d'affichage d'informations (1) du type électro-optique envoyant au travers d'un polariseur (2), un faisceau lumineux vers un élément mélangeur, caractérisé par le fait qu'il comporte au moins une lame demi-onde (8) associée au pare-brise (5) et au polariseur et positionnée convenablement par rapport à la direction de polarisation du faisceau lumineux incident qui arrive sous un angle proche de l'angle de Brewster sur le pare-brise.

2°) Dispositif selon la revendication 1, caractérisé par le fait que la lame demi-onde est collée ou fixée sur la face interne du pare-brise, et que la direction de polarisation est perpendiculaire au plan d'incidence.

3°) Dispositif selon la revendication 1, caractérisé par le fait que la lame demi-onde (8) est intégrée dans le pare-brise (5) et la direction de polarisation est perpendiculaire au plan d'incidence.

4°) Dispositif selon la revendication 1, caractérisé par le fait qu'il comporte deux lames demi-ondes (81, 82) séparées par un élément mélangeur, l'ensemble étant intégré dans le pare-brise et la direction de polarisation parallèle au plan d'incidence.

5°) Dispositif selon la revendication 1, caractérisé par le fait que la lame demi-onde sur laquelle est déposé l'élément mélangeur (4) est séparée du pare-brise et fait un angle non nul avec celui-ci, la direction de polarisation étant perpendiculaire au plan d'incidence.

6°) Dispositif selon l'une quelconque des revendications précédentes, caractérisé par le fait que la lame demi-onde (8) est positionnée de façon à ce que la direction de polarisation fasse un angle de 45° par rapport aux lignes neutres de cette lame.

7°) Dispositif selon l'une quelconque des revendications précédentes, caractérisé par le fait que le mélangeur est formé d'une ou plusieurs couches minces.

8°) Dispositif selon l'une quelconque des revendications précédentes, caractérisé par le fait que l'épaisseur optique de la lame demi-onde (8) est ajustée sur une longueur d'onde correspondant au maximum d'émission de la source d'affichage (1) et pour l'angle d'incidence du rayon lumineux.

9°) Dispositif selon l'une quelconque des revendications précédentes, caractérisé par le fait que le polariseur (2) est incorporé dans la source d'affichage (1).

Fig. 1

Fig. 2

Fig. 3

Fig. 4

Fig.6

x,y: lignes neutres de la lame demi-onde

Fig. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 450 704   (VEREINIGTE GLASSWERKE) <br> * Figure 2; revendications 1-4; colonne 2, lignes 47-68; colonne 4, lignes 14-47 * | 1-4,9 | G 02 B 27/00 |
| D,A | DE-A-3 347 271   (DAIMLER-BENZ) <br> * Document entier * | 1,7,8 | |

**DOMAINES TECHNIQUES RECHERCHES (Int. Cl.5)**

G 02 B
B 60 K
G 01 D

Le présent rapport de recherche a été établi pour toutes les revendications

| Lieu de la recherche | Date d'achèvement de la recherche | Examinateur |
|---|---|---|
| La Haye | 21 novembre 90 | VAN DOREMALEN,J.C.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant